# EUROPEAN PATENT APPLICATION

(11) **EP 0 723 367 A2**
(43) Date of publication of application: **24.07.1996**
(21) Application number: 96300336.3
(22) Date of filing: 17.01.1996
(51) Int. Cl.: H04N 5/50

(54) **Television channel selection apparatus, automatic channel presetting method and picture recording apparatus with channel programming**

(30) Priority: 19.01.1995 JP 24744/95; 28.01.1995 JP 31612/95
(71) Applicant: SONY CORPORATION, Tokyo 141 (JP)
(72) Inventor: Kohashi, Yukari, c/o Sony Corp. Int. Prop. Div., Tokyo 141 (JP); Kinebuchi, Naoyuki, c/o Sony Corp. Int. Prop. Div., Tokyo 141 (JP); Nishigaki, Tetsuo, c/o Sony Corp. Int. Prop. Div., Tokyo 141 (JP)
(74) Representative: Cotter, Ivan John

(57) **Abstract**

When a user inputs country information and language information into (for example) a VCR using a remote commander (12) or a key inputting circuit (13), a microprocessor (3) refers to a corresponding relationship between countries and/or languages and preferential orders of formats to be searched, stored in a third memory (9), and searches broadcasting station codes in accordance with the preferential order. For example, when the country is Germany and the language is German, broadcasting station codes are searched in the order of VPS → 8/30/F1 → PDC.

## Description

This invention relates to channel selection apparatus, a channel presetting method for thc channel selection apparatus, and picture recording apparatus for rcserving picture recording using a Show View code.

Some channel selection apparatuses for use with a video cassette recorder (hereinaftcr referred to as "VCR") or a television receiver have an automatic channel presetting function. In such a channel selection apparatus, reception frequencies of the channel selection apparatus are scanned, for example from the lower side to the higher side, and channels on which a television broadcast is received successfully are registered as preset channels into an internal memory of the channel selection apparatus. If, upon such automatic channel presetting, a broadcasting station code inserted in a vertical blanking period of the video signal is searched and discriminated and then registered into the internal memory of the channel selection apparatus together with the channel information, then when it is tried to select the channel selected later, the name of the broadcasting station of the channel can be displayed on a screen of a television receiver or the like connected to the VCR.

In Europe, as a format for transmission of a broadcasting station code mentioned above, there are three major formats of the VPS format, the 8/30/Formatl and the 8/30/Format2 (also called PDC).

The VPS is used principally in Germany, Switzerland and Austria. Meanwhile, the 8/30/Format1 is principally used in the United Kingdom and an area of Belgium in which French is spoken. Further, the 8/30/Format2 is principally used in Holland and an area of Belgium in which Dutch is spoken.

In a conventional channel selection apparatus with an automatic presetting function, a broadcasting station code is searched merely either with a single format fixed independently of a country or a language or in a single preferential order with a plurality of different formats.

However, the technique of searching a broadcasting station code with a single fixed format has a problem in that it cannot recognize another broadcasting station which is broadcasting its broadcasting station code with another format.

Meanwhile, the technique of searching a broadcasting station code in a single preferential order with a plurality of different formats has another problem in that, in a region in which a format set to a comparatively low preferential order number is used principally, a long search time is required since searching of unnecessary broadcasting station codes is involved.

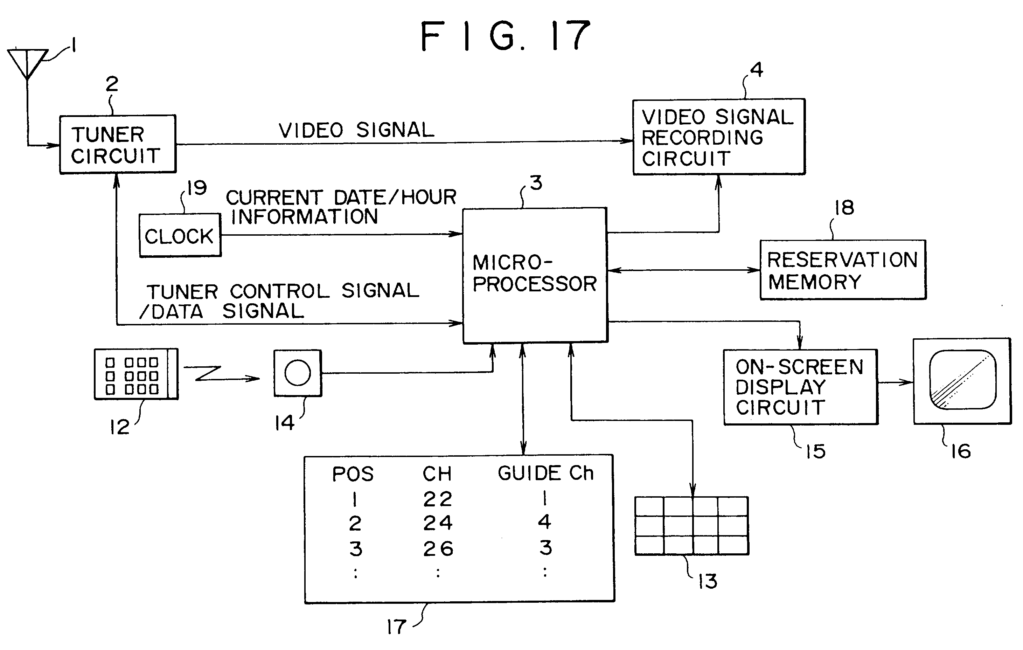

By the way, in order to facilitate picture recording reservation, a video cassette recorder which performs picture recording reservation using a Show View code has been proposed. An exemplary construction of a video cassette recorder of the type mentioned is shown in FIG. 17. It is to be noted that the Show View code is called also as VCR plus or G code.

In the video cassette recorder of FIG. 17, if a user reads a television program guide magazine or the like and inputs a Show View code of a program desired to be reserved for picture recording by manual operation of keys of a key inputting circuit 13 of a body of the video cassette recorder or a remote commander 12, then a microprocessor 3 in the video cassette recorder body decodes the Show View code and sets a starting date and time (hour and minute) and an ending time (hour and minute) of a program and a channel of a tuner circuit 2 corresponding to a guide channel of the Show View system, which are picture recording reservation information, to a reservation memory 18. Then, when current date and time information produced by a clock 19 becomes coincident with the date and time set to the reservation memory 18, the microprocessor 3 sends a tuner control signal for controlling the tuner circuit 2 to receive the reserved channel. Further, the microprocessor 3 sends a control signal for setting a video signal recording circuit 4 to a recording mode. If the tuner circuit 2 succeeds in reception of a broadcast in response to the tuner control signal, then it transmits a data signal such as an AFT signal to the microprocessor 3.

Upon such picture recording reservation as described above, a data table 17 is referred to in order to convert the guide channel of the Show View system ( hereinafter referred to simply as "guide channel") into a channel to be selected by the tuner circuit 2. Of contents of the data table 17, channels corresponding to channel selection positions are set, for example, by automatic channel presetting of the tuner circuit 2. In the automatic channel presetting, reception frequencies of the tuner circuit 2 are scanned, for example, from the lower side to the higher side, and channels with which a television signal is received successfully are registered as preset channels into the data table.

On the other hand, mapping between the selection channels set in the data table in this manner and guide channels is performed by manual operation of the keys of the key inputting circuit 13 or the remote commander 12 by a user.

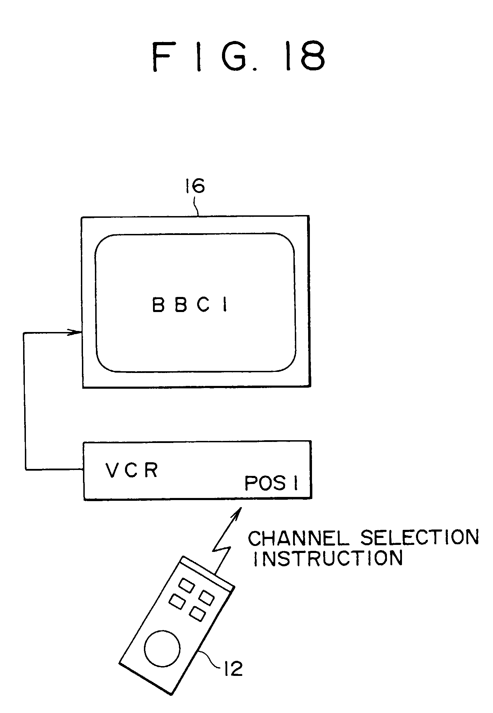

When the mapping is performed by manual operation of the keys of the remote commander 12, the user will first manually operate a key of the remote commander 12 to provide a channel selection instruction for the position 1 to the video cassette recorder as seen in FIG. 18. Then, looking at an image on a monitor television 12, the user will confirm a broadcasting station to be selected at the position 1. In FIG. 18, it is shown that the broadcasting station to be selected at the position 1 is the BBC1. It is to be noted that the video cassette recorder is naturally constructed such that, though not shown in FIG. 17, a video signal received by the tuner circuit 2 is supplied to the monitor television 12.

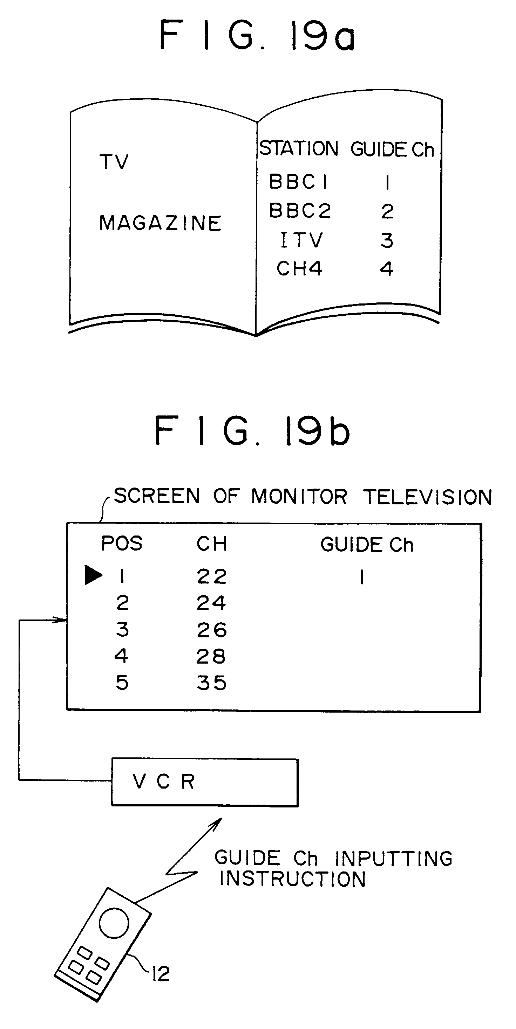

Then, while observing a correspondence list of broadcasting stations and guide channels reported on a television program guide magazine 13 as seen in FIG. 19 a, the user will input the number of a guide channel corresponding to the broadcasting station at the position 1 using the remote commander 12 as seen in FIG. 19 b. In this instance, such a screen for setting a guide channel for the position 1 as shown in FIG. 19 b is displayed on the screen of the monitor television 12 by an on-screen display circuit 15.

By performing the series of operations described above for all channel selection positions of the tuner circuit, mapping between the selection channels and the guide channels of the tuner circuit 2 is stored into the data table 17 of FIG. 17.

However, in the mapping operation between selection channels and guide channels in the conventional video cassette recorder described above, there is the possibility that a user may set the same guide channel for selection channels of two or more broadcasting stations.

Then, if setting of a guide channel is mistaken in this manner, then when the microprocessor 3 in the video cassette recorder body tries to convert a guide channel obtained by decoding a Show View code into a selection channel of the tuner circuit 2, it cannot convert the guide channel into a correct selection channel. As a result, there is a problem in that a program desired to be reserved for picture recording cannot be recorded.

Further, in the conventional video cassette recorder wherein mapping between selection channels of the tuner circuit and guide channels is performed by manual operation, it is required to acquire guide channel information corresponding to individual broadcasting stations from a television program guide magazine or the like and manually input guide channels one by one corresponding to positions at which selected channels are stored. Therefore, the procedure is complicated and a wrong guide channel is possibly inputted sometimes. Further, since guide channel information is reported on only limited television program guide magazines, it is cumbersome to acquire one of such television program guide magazines.

In order to eliminate such problems of the conventional video cassette recorder, an improved video cassette recorder has been proposed wherein mapping between selection channels of a tuner circuit and guide channels is performed automatically (refer to, for example, Japanese Patent Laid-Open Application No. Heisei 6-20335). The video cassette recorder includes a correspondence list between broadcasting station codes added to television broadcasting signals and guide channels as a table. The video cassette recorder automatically performs mapping between a channel selected by its tuner circuit and a guide channel based on a broadcasting station code detected from a received television broadcasting signal and the table.

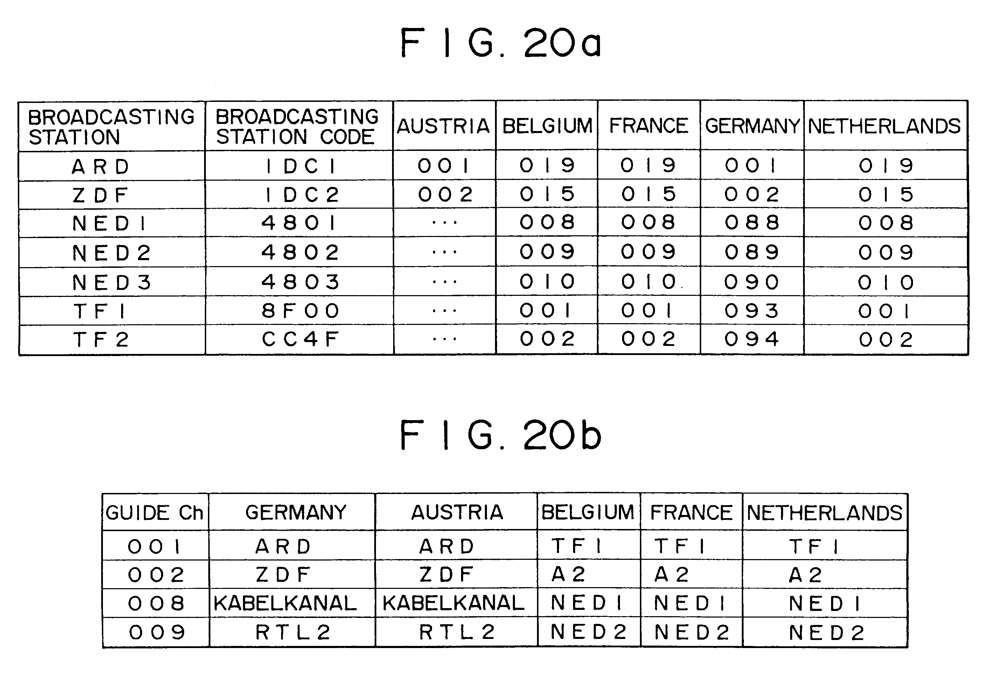

The corresponding relationship between guide channels and broadcasting stations are determined for individual countries by Gemstar which is the developer of the Show View system. FIG. 20 a illustrates a corresponding relationship among broadcasting stations, broadcasting station codes and guide channels in some European countries. From the table, such a corresponding relationship of the broadcasting stations of the countries with respect to the guide channels as seen in FIG. 20 b is obtained.

As can be seen from FIG. 20 b, the broadcasting stations corresponding to the same guide channels are different among a group of Germany and Austria and another group of Belgium, France and Holland. Accordingly, where the table between broadcasting codes and guide channels incorporated in a video cassette recorder is, for example, directed principally to Germany, if a result of decoding of a Show View code is "December 9, 1994, from 13:00 to 15:00, guide channel 1", then since the guide channel 1 in the video cassette recorder is so set that a broadcast of the ARD is recorded in any country, a program of the ARD will be recorded, in Belgium, France or Holland, although the guide channel 1 in those countries originally is the TF1. In this manner, the conventional video cassette recorder is disadvantageous also in that a wrong program may be recorded in this manner.

According to an aspect of the present invention, there is provided a channel selection apparatus having a function of detecting broadcasting station identification information added to a video signal and registering the broadcasting station identification information together with channel information, characterized in that a corresponding relationship in retrieval preferential order between countries and/or languages and a plurality of kinds of broadcasting station identification information is stored in advance in first storage means, and retrieval of broadcasting station identification information is performed in accordance with the preferential order stored in said first storage means based on at least one of country information and language information inputted to said channel selection apparatus.

Preferably, a corresponding relationship between a plurality of kinds of broadcasting station identification information and retrieval times is stored in advance in second storage means.

According to another aspect of the present invention, there is provided an automatic channel presetting method for a channel selection apparatus having a function of detecting broadcasting station identification information added to a video signal and registering the broadcasting station identification information together with channel information, characterized in that it comprises the steps of inputting at least one of country information and language information, selecting a predetermined channel, determining a retrieval preferential order of the broadcasting station identification information based on the inputted information and retrieving the broadcasting station identification information from a video signal of the selected channel, and registering the detected broadcasting station identification information together with the selected channel information.

Preferably, a predetermined retrieval time is set for each broadcasting station identification information.

In the channel selection apparatus and the automatic channel presetting method, when at least one of country information and language information is inputted, a retrieval preferential order of the broadcasting station identification information is determined based on the corresponding relationship in retrieval preferential order between the countries and/or the languages and the plurality of kinds of broadcasting station identification information stored in the first storage means, and the broadcasting station identification information is retrieved in the order. Then, detected broadcasting station identification information is registered together with the channel information.

With the channel selection apparatus and the automatic channel presetting method, since the retrieval preference order of broadcasting station identification information is determined based on at least one of country information and language information inputted, recognition of a plurality of kinds of broadcasting station identification information and reduction in search time can be realized.

Further, where the retrieval time is set in response to broadcasting station identification information, retrieval of broadcasting station identification information can be performed more efficiently.

Furthermore, even if a broadcasting station which is transmitting a plurality of kinds of broadcasting station identification information transmits wrong contents for one of the plurality of kinds of broadcasting station identification information, if the broadcasting station identification information of the other kinds is correct, then the contents can be recognized.

According to a further aspect of the present invention, there is provided a picture recording apparatus having a function of reserving picture recording using a Show View code, characterized in that first means for selecting a video signal, second means for detecting broadcasting station identification information from the video signal selected by said first means, third means for inputting information, first storage means in which corresponding relationships between broadcasting station identification information for different countries and guide channels of the Show View system are stored, and second storage means for registering a corresponding relationship between the selection channel selected by said first means and one of the guide channels, and that the corresponding relationship between the selection channel and the guide channel is registered into said second storage means based on the broadcasting station identification information detected by said second means and one of the corresponding relationships stored in said first storage means which is designated by country information inputted by said third means.

In the picture recording apparatus, the corresponding relationship between the selection channel and the guide channel is registered into the second storage means based on broadcasting station identification information detected by the second means and one of the corresponding relationships of the first storage means designated by country information inputted from the third means.

With the picture recording apparatus, since mapping between a selection channel and a guide channel is automatically performed taking at least a country into consideration, a setting operation by a user itself is unnecessary, and accurate mapping can be achieved.

According to a still further aspect of the present invention, there is provided a picture recording apparatus which includes means for inputting information, and storage means for registering a corresponding relationship between a guide channel of the Show View system and a selection channel and wherein an inputted Show View code is decoded to obtain a starting date and time and an ending time of a program and the guide channel and the guide channel is converted into the selection channel to obtain picture recording reservation information, characterized in that, when the corresponding relationship between the guide channel and the selection channel is to be registered into said storage means, if a guide channel inputted for registration coincides with one of registered guide channels, writing of the guide channel into said storage means is inhibited.

With the picturc recording apparatus, setting of the same guide channel for selection channels of two or more broadcasting stations is inhibited. In short, since one guide channel is set corresponding only to a selection channel of one broadcasting station, the guide channel can be converted into a one and only correct selection channel. Consequently, accurate picture recording reservation can normally be performed.

A preferred form of implementation of the present invention described hereinbelow provides:
a channel selection apparatus and an automatic channel presetting method for the channel selection apparatus which allow recognition of broadcasting station codes of a plurality of different formats and reduction of search time;
a picture recording apparatus which has a function of inhibiting setting of the same guide channel for selection channels of two or more broadcasting stations; and
a picture recording apparatus wherein mapping between a selection channel of a tuner circuit and a guide channel is performed automatically taking at least country information into consideration.

The invention will now be further described, by way of illustrative and nonlimiting example, with reference to the accompanying drawings, in which like parts or elements are denoted by like reference characters, and in which:
FIG. 1 is a block diagram showing a video cassette recorder to which the present invention is applied.
FIGS. 2 a to 2 e are tables illustrating information stored in first to fifth memories of the video cassette recorder of FIG. 1, respectively:
FIGS. 3 to 6 are flow charts illustrating automatic channel presetting operation of the video cassette recorder of FIG. 1;
FIG. 7 is a schematic view showing a screen displayed on a monitor television connected to the video cassette recorder of FIG. 1 when a language is inputted;
FIG. 8 is a similar view but showing the screen displayed on the monitor television shown in FIG. 1 when a country is inputted;
FIG. 9 is a schematic view showing the screen of the monitor television shown in FIG. 1 when it displays automatically preset channels;
FIG. 10 is a block diagram showing another video cassette recorder to which the present invention is applied;
FIGS. 11 a to 11 d are tables illustrating information stored in second and fifth to seventh memories of the video cassette recorder of FIG. 10, respectively;
FIGS. 12 and 13 are flow charts illustrating automatic channel presetting and guide channel setting operation of the video cassette recorder of FIG. 10;
FIG. 14 is a schematic view showing a screen displayed on a monitor television connected to the video cassette recorder of FIG. 10 when a country is inputted;
FIG. 15 is a schematic view showing another screen displayed on the monitor television shown in FIG. 10;
FIG. 16 is a flow chart illustrating guide channel setting processing of a microprocessor of the video cassette recorder of FIG. 10;
FIG. 17 is a block diagram showing a conventional video cassette recorder by which picture recording can be reserved using a Show View code;
FIG. 18 is a schematic view illustrating a method of confirming a selection channel using the video cassette recorder of FIG. 17;
FIGS. 19 a and 19 b are schematic views illustrating a method of setting a guide channel using the video cassette recorder of FIG. 17; and
FIGS. 20 a and 20 b are tables illustrating a correspondence relationship between broadcasting stations of different countries and Show View codes.

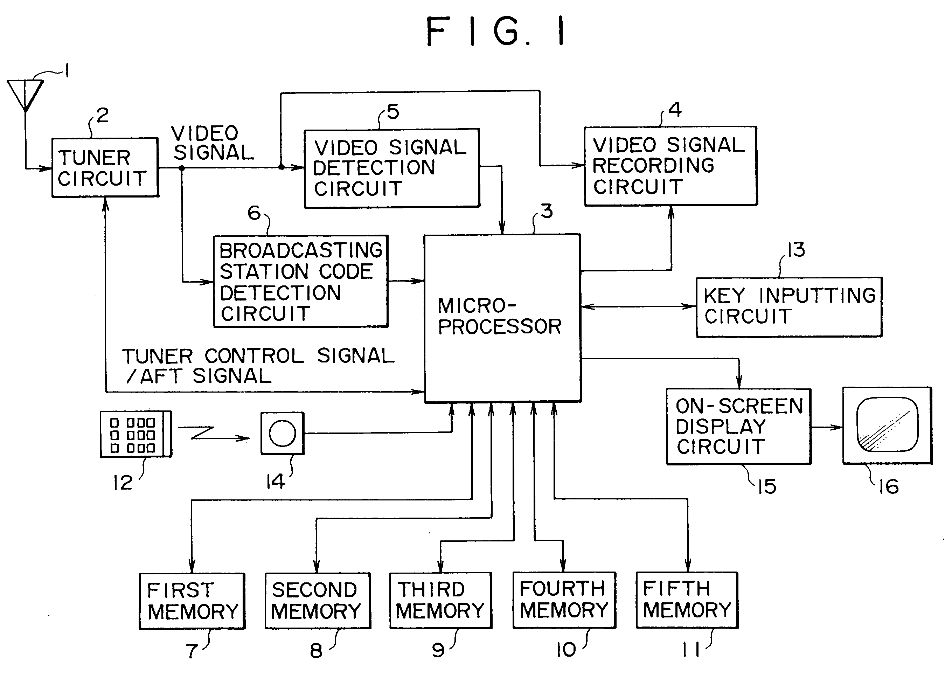

Referring first to FIG. 1, there is shown in block diagram a video cassette recorder to which the present invention is applied. Broadcasting radio waves received by an antenna 1 are sent to a tuner circuit 2. A tuner control signal such as a channel selection voltage is supplied from a microprocessor 3 to the tuner circuit 2 so that a desired channel is selected by the tuner circuit 2. On the other hand, an AFT signal is sent from the tuner circuit 2 to the microprocessor 3.

A video signal of the channel selected by the tuner circuit 2 is sent to a video signal recording circuit 4. The video signal is recorded by the video signal recording circuit 4 when a recording mode is set by the microprocessor 3.

The video signal of the channel selected by the tuner circuit 2 is sent also to a video signal detection circuit 5, by which the video signal is detected. The output of the video signal detection circuit 5 is used to discriminate whether a channel has been selected successfully upon automatic channel presetting (details will be hereinafter described).

The video signal of the channel selected by the tuner circuit 2 is sent also to a broadcasting station code detection circuit 6, by which a broadcasting station code is detected. In the present embodiment, the detection of a broadcasting station code is performed in accordance with a predetermined preferential order based on information of a country and a language inputted from a remote commander 12 or a key inputting circuit 13.

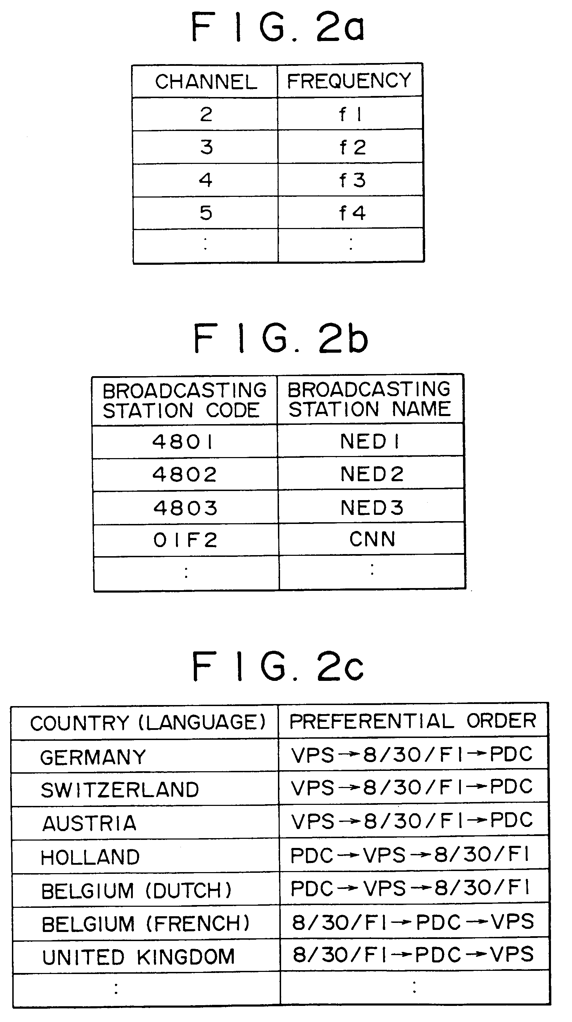

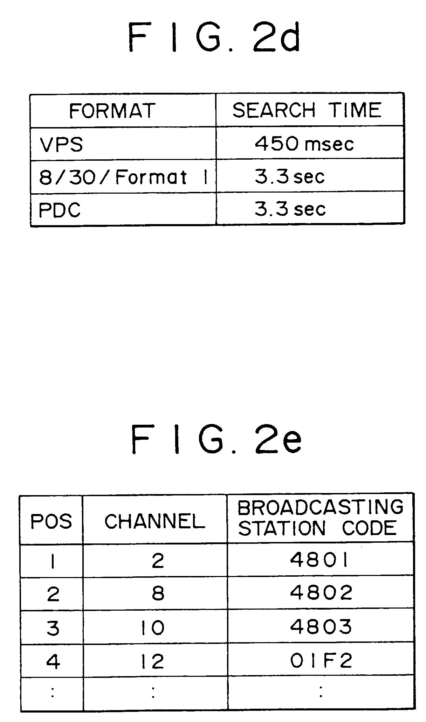

First to fifth memories 7 to 11 are provided in order to store information necessary for detection of a broadcasting station code and a detected broadcasting station code in a corresponding relationship to channel information. Information stored in the memories is illustrated in FIGS. 2 a to 2 e. Of those memories 7 to 11, the first to fourth memories are formed from, for example, ROMs (including re-writable ROMs such as EEPROMs), but may actually be a single ROM whose storage area is divided for them. Meanwhile, the fifth memory is formed, for example, from an EEPROM or a RAM having a backup function.

The first memory 7 is such a table in which information representing a corresponding relationship between channel numbers and reception frequencies is stored in advance as seen in FIG. 2 a.

The second memory 8 is such a table in which a corresponding relationship between broadcasting station codes and broadcasting station names is stored in advance as seen in FIG. 2 b.

The third memory 9 is such a table in which a corresponding relationship between countries or languages and preferential orders of formats to be searched is stored in advance as seen in FIG. 2 c.

The fourth memory 10 is such a table in which a corresponding relationship between formats and search times is stored in advance as seen in FIG. 2 d. Here, for the VPS, the search time is set to 450 msec because the broadcasting station code is inserted for each one field of a video signal. Meanwhile, for the 8/30/Formatl and the PDC, the search time is set to 3.3 sec because the broadcasting station code is inserted for each one second.

The fifth memory 11 stores such a corresponding relationship among positions, channels and broadcasting station codes set as a result of automatic channel presetting as seen in FIG. 2 e.

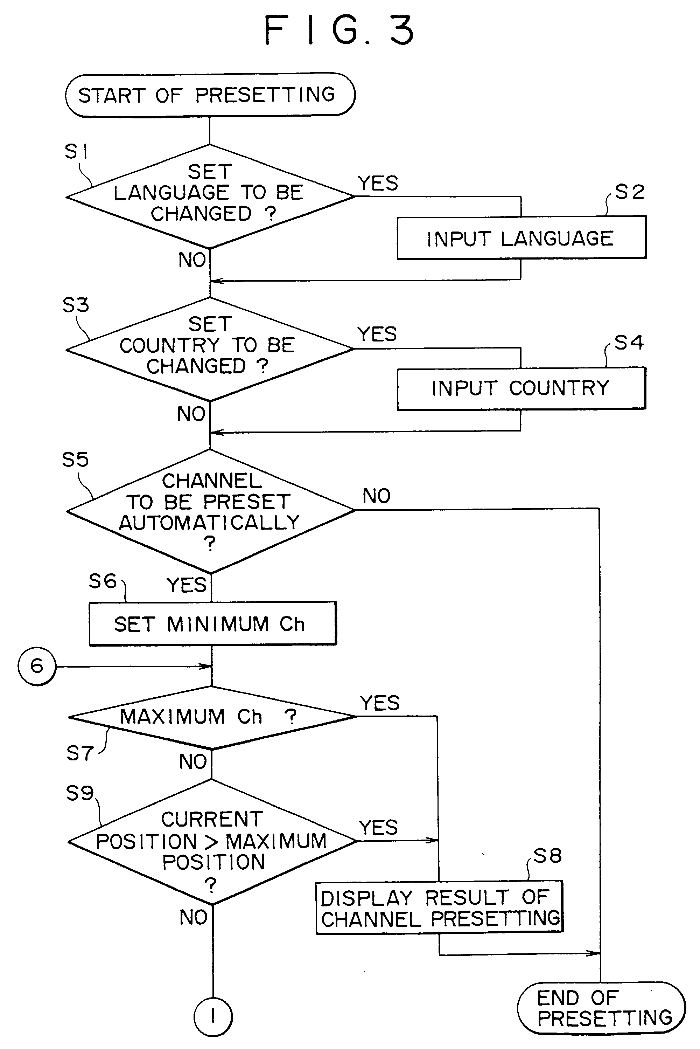

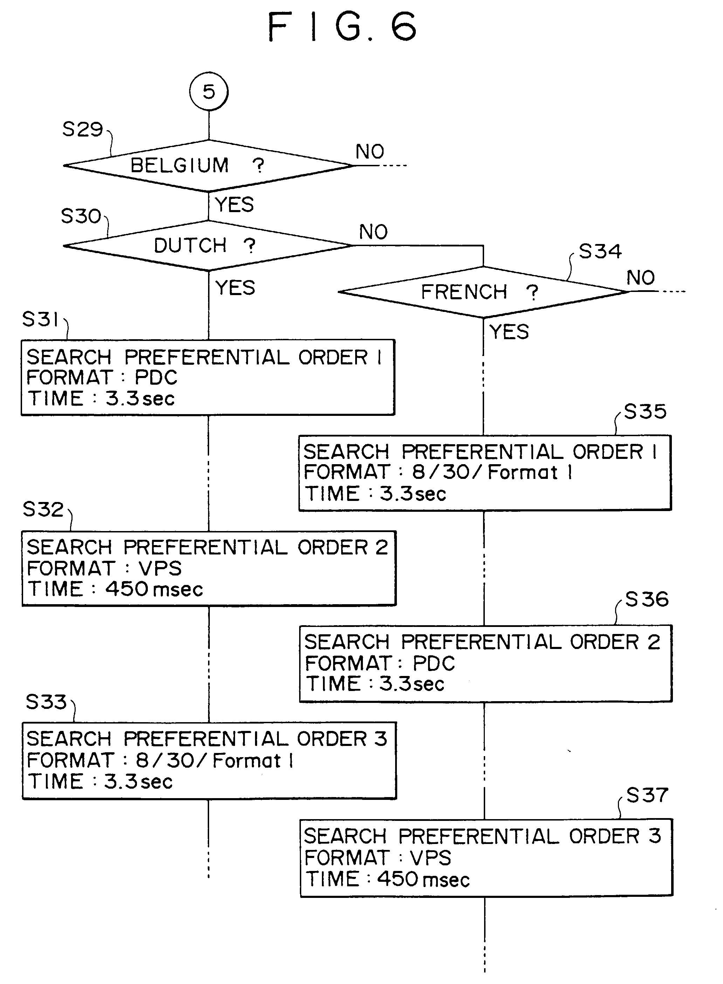

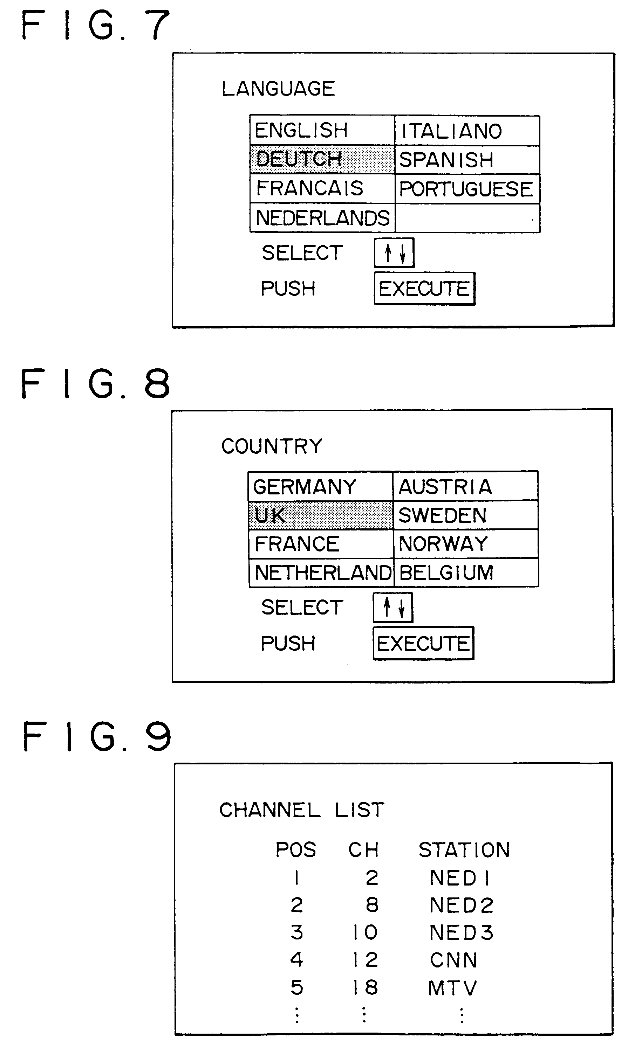

FIGS. 3 to 6 are flow charts illustrating automatic channel presetting operation of the video cassette recorder described above. Meanwhile, FIGS. 7 and 8 show display images displayed on a monitor television 16 by an on-screen display circuit 15 when a language is inputted and when a country is inputted, respectively. The automatic channel presetting operation will be described below with reference to FIGS. 1 to 8.

First, a user will manually operate an automatic channel presetting key of the remote commander 12 or the key inputting circuit 13 of the video cassette recorder body to set an automatic channel presetting mode. The information inputted to the remote commander 12 is converted into infrared rays by the remote commander 12 and then converted by an infrared rays reception circuit 14 into an electric signal. The electric signal is fetched by the microprocessor 3. On the other hand, the information inputted from the key inputting circuit 13 is fetched directly by the microprocessor 3.

After the automatic channel presetting mode is started in this manner, such a language setting menu as shown in FIG. 7 is displayed on the monitor television 16. Here in FIG. 7, it is shown that German is selected. When the user tries to change the setting of the language, the user will manually operate, while watching the screen of the monitor television 16, a cursor moving key of the remote commander 12 or the key inputting circuit 13 to move a cursor (a portion where the background color is different from the color of the other portion in FIG. 7) on the screen, and then depress, when the cursor reaches the position of a desired language, an execution key to definitely set the language. The processing described above is performed at steps S1 and S2 of FIG. 3 by the microprocessor 3.

After the language setting is completed, country setting is subsequently performed in a similar manner. In this instance, such a country setting menu as shown in FIG. 8 is displayed on the monitor television 16. In this instance, it is shown in FIG. 8 that the United Kingdom is selected. The user will change country setting, when necessary, in a similar manner as in language setting. In this instance, the processing is performed at steps S3 and S4 of FIG. 3 by the microprocessor 3. It is to be noted that the order of the country setting and the language setting may be reversed.

After the language setting and the country setting are completed in such a manner as described above, channel selection is automatically started beginning with a minimum channel (steps S5 and S6). If automatic channel presetting should not be performed after the language setting and the country setting are completed, the automatic channel presetting key will be depressed again. In response to the second time depression, the automatic channel presetting mode is cancelled (No at step S5 → end of presetting).

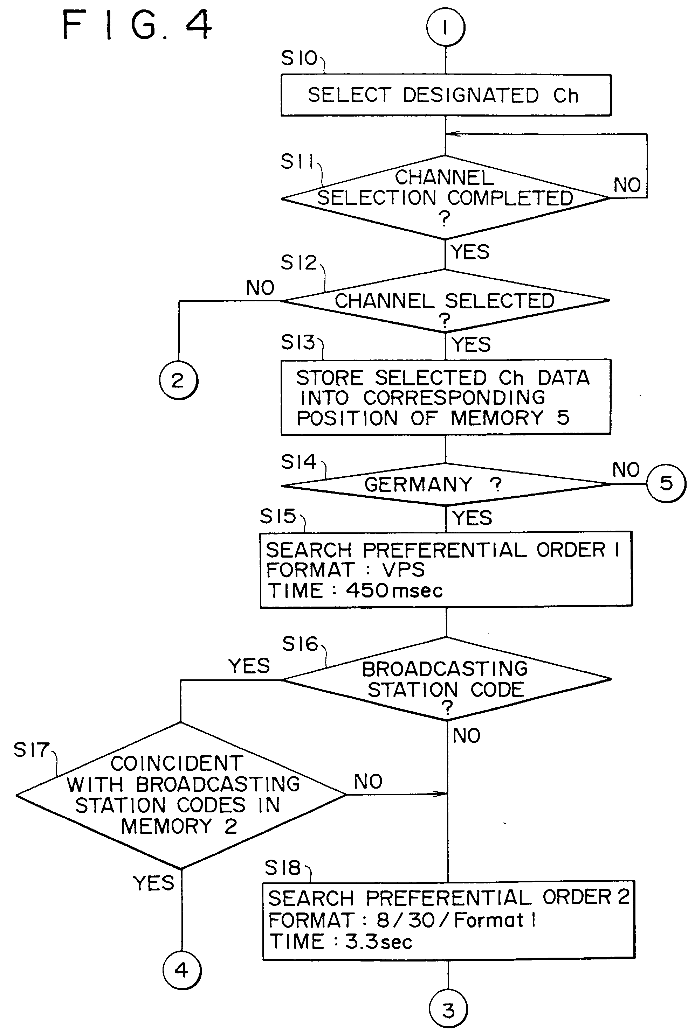

If the information stored in the first memory 7 in advance is such as illustrated in FIG. 2 a, then the minimum channel is 2. After selection of the designated channel is started (step S10 in FIG. 4), it is waited that the channel selection comes to an end (step Sll). Then, if the channel selection is completed successfully, then the number of the selected channel is stored into a corresponding position of the fifth memory 11 (steps S12 and S13). For example, in the case of FIG. 2 a, a tuner control signal corresponding to a frequency fl is first sent from the microprocessor 3 to the tuner circuit 2. Then, the microprocessor 3 waits that the frequency of a PLL (phase locked loop) (not shown) in the tuner circuit 2 becomes stabilized to fl and an AFT signal is sent out from the tuner circuit 2. Further, if a video signal is detected by the video signal detection circuit 5, then the channel 2 is stored into the position 1 of the fifth memory 11.

If the channel has not been selected successfully, then a next channel (in the case of FIG. 2 a, channel 3) is set (step S28). Thereafter, the processing is repeated beginning with step S7.

If the channel is selected successfully at step S12 and then the channel data are stored into the predetermined position of the fifth memory 11 at step S13, the country inputted in advance (depending upon the country, also the language) is discriminated (S14, S29, S30 and S34). Then, based on a result of the discrimination, the third memory 9 and the fourth memory 10 are referred to to determine a format to be searched and a search time. For example, if the country is Germany, then the format of the first in the search preferential order is the VPS format, and the search time is set to 450 msec (S15).

Thus, the broadcasting station code detection circuit 6 searches a broadcasting station which employs the VPS format and sends the code of the detected broadcasting station to the microprocessor 3. The microprocessor 3 compares the detected broadcasting station code with the broadcasting station codes stored in the second memory 8, and if coincidence is detected, then the broadcasting station code is stored into a corresponding position of the fifth memory 11 (steps S16, S17 and S24). Then, the current position is updated with the value of the position of the maximum successfully received channel (S25), whereafter the position is incremented by one (S27).

When the broadcasting station code is not detected, or even if the broadcasting station code is detected, when the second memory 8 does not include a coincident broadcasting station code, the format to be searched and the search time are set to the 8/30/Formatl of the second preferential order number and 3.3 sec, respectively. In this condition, the broadcasting station code is searched (step S18). Here, if the broadcasting station code is detected and a coincident broadcasting station code is detected in the second memory 8, then the broadcasting station code is stored into the corresponding position of the fifth memory 11 (steps S19, S20 and S24).

When the broadcasting station code is not detected, or even if the broadcasting station code is detected, when no coincident broadcasting station code is detected in the second memory 8, the format to be searched and the search time are set to the PDC format of the third preferential order number and 3.3 sec, respectively. In this condition, the broadcasting station code is searched (steps S21). Here, if the broadcasting station code is detected and a coincident broadcasting station code is detected in the second memory 8, then the broadcasting station code is stored into the corresponding position of the fifth memory 11 (steps S22, S23 and S24).

If the broadcasting station code coincident with any broadcasting station code stored in the second memory 8 is not successfully detected by the searching up to the format at the third in the preferential order, a next channel is set without incrementing the position (step S28), and the processing is repeated beginning with step S7.

Then, when the maximum channel is reached (step S7) or the maximum position is reached (step S9), a result of the automatic channel presetting is displayed on the monitor television 16 based on the information stored in the fifth memory 11 and the information stored in advance in the second memory 8 (step S8). An example of the display screen of the result of presetting is shown in FIG. 9. If the execution key is depressed in this condition, then the display disappears and the automatic channel presetting processing comes to an end.

It is to be noted that the third memory in the embodiment described above may be constructed otherwise such that it stores in advance a corresponding relationship between countries or languages and preferential orders of the formats to be searched. Further, the channel selection apparatus of the present invention can be applied as a channel selection apparatus for a television receiver, a channel selection apparatus for use with an apparatus for recording a video signal onto a hard disk, a magneto-optical disk or the like of a computer and so forth.

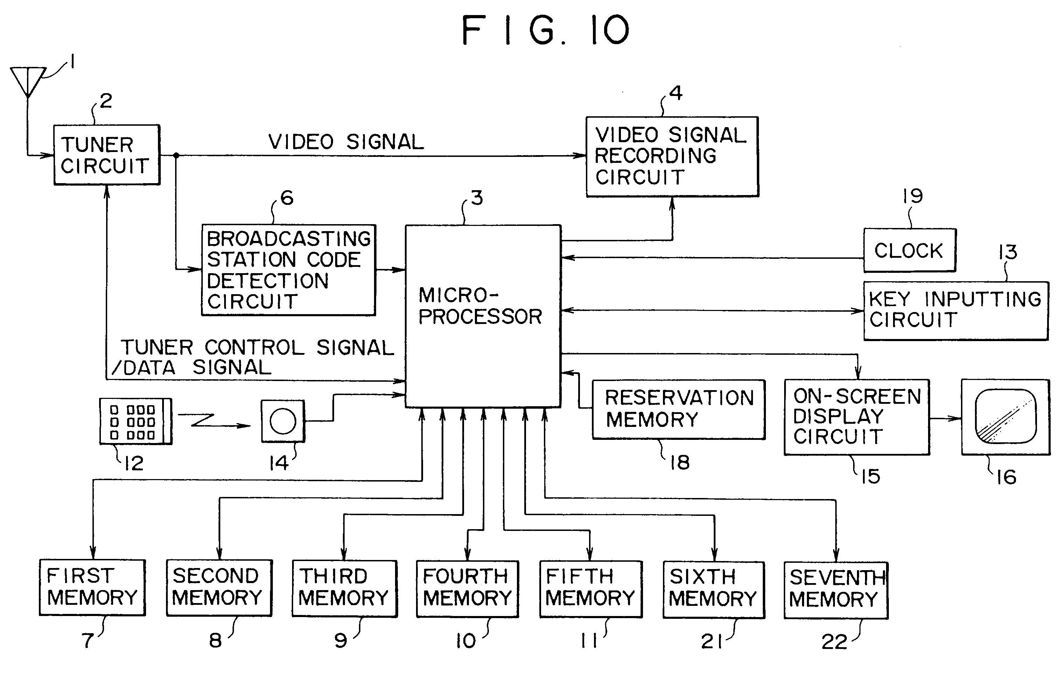

Referring now to FIG. 10, there is shown in block diagram another video cassette recorder to which the present invention is applied. Television broadcasting radio waves received by an antenna 1 are sent to a tuner circuit 2. A tuner control signal such as a channel selection voltage is supplied from a microprocessor 3 to the tuner circuit 2 so that a desired channel is selected by the tuner circuit 2. On the other hand, an AFT signal is sent from the tuner circuit 2 to the microprocessor 3.

A video signal of the channel selected by the tuner circuit 2 is sent to a video signal recording circuit 4. The video signal is recorded by the video signal recording circuit 4 when a recording mode is set by the microprocessor 3.

The video signal of the channel selected by the tuner circuit 2 is sent also to a broadcasting station code detection circuit 6, by which a broadcasting station code is detected. In the present embodiment, the detection of a broadcasting station code is performed in accordance with a predetermined preferential order based on information of a country and a language inputted from a remote commander 12 or a key inputting circuit 13. Further, mapping between guide channels and broadcasting stations is performed based on the inputted country information. Furthermore, also language information is inputted for each country in which different languages are spoken such as Belgium in which French is spoken in an area and Dutch is spoken in the other area.

First to seventh memories 7 to 11, 21 and 22 are provided in order to store information necessary for detection of a broadcasting station code, information necessary for mapping between guide channels and broadcasting stations, a detected broadcasting station code, selection channels and guide channels in a corresponding relationship to each other.

Information stored in the memories 7 to 11, 21 and 22 is illustrated in FIGS. 2 a, 11 a, 2 c, 2 d and 11 b to 11 d, respectively. Of those memories 7 to 11, 21 and 22, the first to fourth memories 7 to 10 and the sixth memory 21 are formed from, for example, ROMs (including re-writable ROMs such as EEPROMs), but may actually be a single ROM whose storage area is divided for them. Meanwhile, the fifth memory 11 is formed from a RAM. Further, the seventh memory 22 is formed, for example, from an EEPROM or a RAM having a backup function.

The first memory 7 is such a table in which information representing a corresponding relationship between channel numbers and reception frequencies is stored in advance as seen in FIG. 2 a.

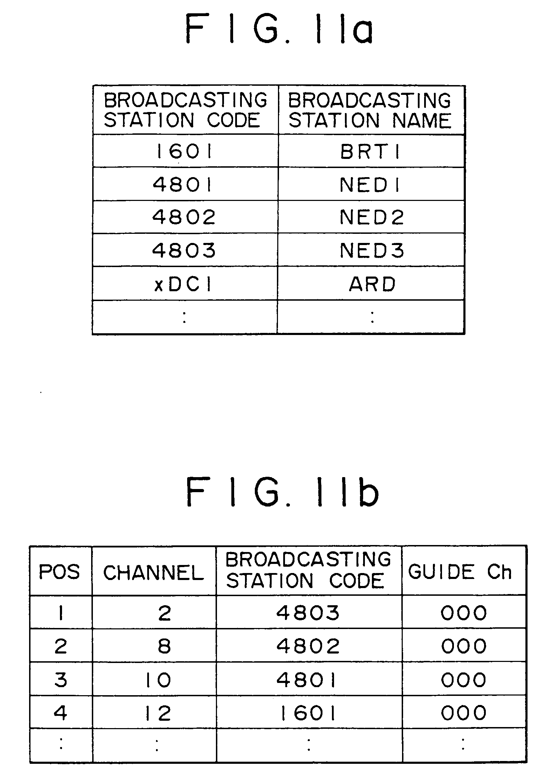

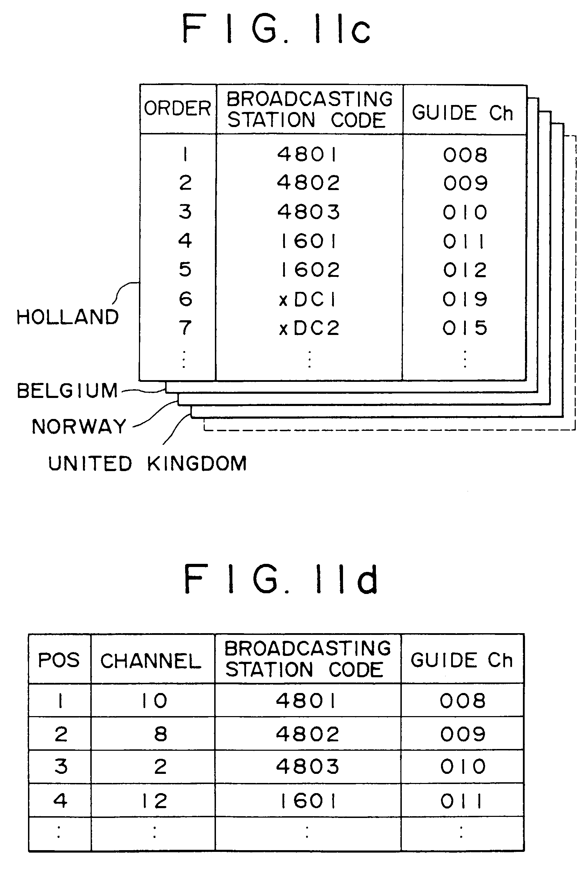

The second memory 8 is such a table in which a corresponding relationship between broadcasting station codes and broadcasting station names is stored in advance as seen in FIG. 11 a.

The third memory 9 is such a table in which a corresponding relationship between countries or languages and preferential orders of formats to be searched is stored in advance as seen in FIG. 2 c.

The fourth memory 10 is such a table in which a corresponding relationship between formats and search times is stored in advance as seen in FIG. 2 d. Here, for the VPS, the search time is set to 450 msec because the broadcasting station code is inserted for each one field of a video signal. Meanwhile, for the 8/30/Formatl and the PDC, the search time is set to 3.3 sec because the broadcasting station code is inserted for each one second.

The fifth memory 11 temporarily stores such a corresponding relationship among positions, selection channels and broadcasting station codes set as a result of automatic channel presetting as seen in FIG. 11 b.

The sixth memory 21 is such a table in which a corresponding relationship between broadcasting codes and guide channels of individual countries is stored together with preferential order numbers as seen in FIG. 11 c. Upon determination of the preferential order numbers, they may be determined such that, for example, main broadcasting stations in the country may be higher in preferential order. It is to be noted that, for example, for Belgium, a table for an area in which Dutch is used and another table for the other area in which French is used are prepared as seen in FIG. 11 c.

The seventh memory 22 is such a table in which positions, selection channels and broadcasting station codes set as a result of automatic channel presetting are stored in a corresponding relationship to guide channels as shown in FIG. 11 d.

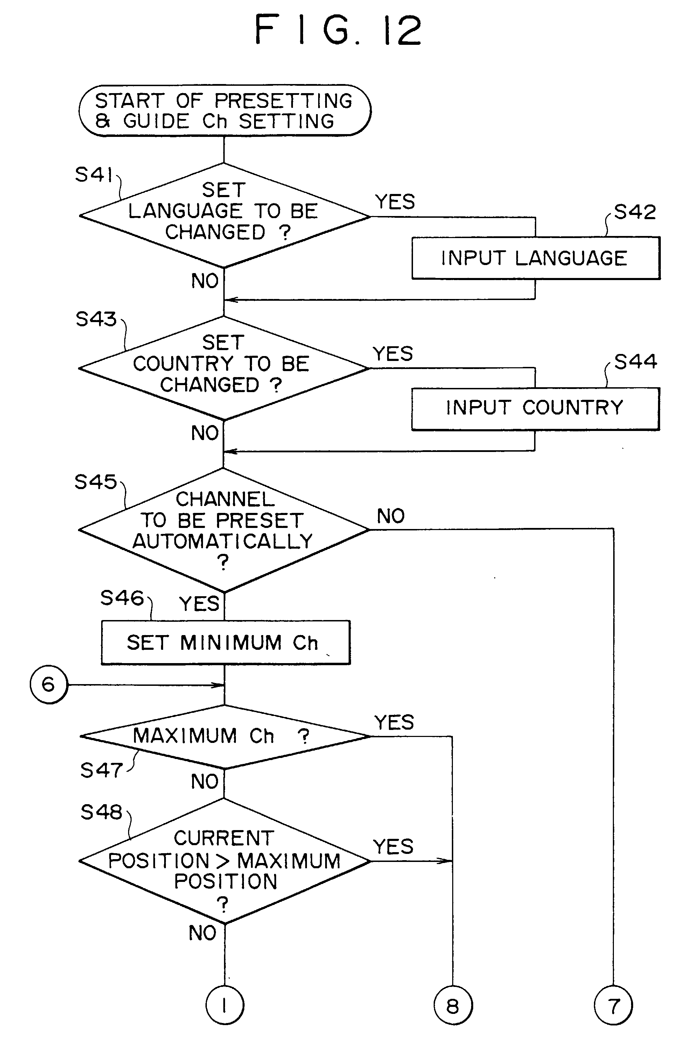

FIGS. 12, 4 to 6 and 13 are flow charts illustrating automatic channel presetting and guide channel setting operation of the video cassette recorder described above with reference to FIG. 10. Meanwhile, FIGS. 7 and 8 show display images displayed on a monitor television 16 by an on-screen display circuit 15 when a language is inputted and when a country is inputted, respectively. The automatic channel presetting and guide channel setting operation will be described below with reference to FIGS. 4 to 8 and 10 to 13.

First, a user will manually operate an automatic channel presetting key of the remote commander 12 or the key inputting circuit 13 of the video cassette recorder body to set an automatic channel presetting mode. The information inputted to the remote commander 12 is converted into infrared rays by the remote commander 12 and then transmitted to and converted by an infrared rays reception circuit 14 into an electric signal. The electric signal is fetched by the microprocessor 3. On the other hand, the information inputted from the key inputting circuit 13 is fetched directly by the microprocessor 3.

After the automatic channel presetting and guide channel setting mode is started in this manner, such a language setting menu as shown in FIG. 7 is displayed on the monitor television 16. Here in FIG. 7, it is shown that German is selected. When the user tries to change the setting of the language, the user will manually operate, while watching the screen of the monitor television 16, a cursor moving key of the remote commander 12 or the key inputting circuit 13 to move a cursor (a portion where the background color is different from the color of the other portion in FIG. 7) on the screen, and then depress, when the cursor reaches the position of a desired language, an execution key to definitely set the language. The processing described above is performed at steps S41 and S42 of FIG. 12 by the microprocessor 3.

After the language setting is completed, country setting is subsequently performed in a similar manner. In this instance, such a country setting menu as shown in FIG. 8 is displayed on the monitor television 16. In this instance, it is shown in FIG. 8 that the United Kingdom is selected. The user will change country setting, when necessary, in a similar manner as in language setting. In this instance, the processing is performed at steps S43 and S44 of FIG. 12 by the microprocessor 3. It is to be noted that the order of the country setting and the language setting may be reversed.

After the language setting and the country setting are completed in such a manner as described above, channel selection is automatically started beginning with a minimum channel (steps S45 and S46). If automatic channel presetting should not be performed after the language setting and the country setting are completed, the automatic channel presetting key will be depressed again. In response to the second time depression, the automatic channel presetting mode is cancelled (No at step S45 → end of presetting).

If the information stored in the first memory 7 in advance is such as illustrated in FIG. 2 a, then the minimum channel is 2. After selection of the designated channel is started (step S10 in FIG. 4), it is waited that the channel selection comes to an end (step S11). Then, if the channel selection is completed successfully, then the number of the selected channel is stored into a corresponding position of the fifth memory 11 (steps S12 and S13). For example, in the case of FIG. 2 a, a tuner control signal corresponding to a frequency f1 is first sent from the microprocessor 3 to the tuner circuit 2. Then, the microprocessor 3 waits that the frequency of a PLL (not shown) in the tuner circuit 2 becomes stabilized to fl and an AFT signal is sent out from the tuner circuit 2. Further, if a video signal is detected by the video signal detection circuit 5, then the channel 2 is stored into the position 1 of the fifth memory 11.

If the channel has not been selected successfully, then a next channel (in the case of FIG. 2 a, channel 3) is set (step S28). Thereafter, the processing is repeated beginning with step S47.

If the channel is selected successfully at step S12 and then the channel data are stored into the predetermined position of the fifth memory 11 at step S13, the country inputted in advance (depending upon the language, also the language) is discriminated (S14, S29, S30 and S34). Then, based on a result of the discrimination, the third memory 9 and the fourth memory 10 are referred to to determine a format to be searched and a search time. For example, if the country is Germany, then the format of the first in the search preferential order is the VPS format, and the search time is set to 450 msec (S15).

Thus, the broadcasting station code detection circuit 6 searches a broadcasting station which employs the VPS format and sends the code of the detected broadcasting station to the microprocessor 3. The microprocessor 3 compares the detected broadcasting station code with the broadcasting station codes stored in the second memory 8, and if coincidence is detected, then the broadcasting station code is stored into a corresponding position of the fifth memory 11 (steps S16, S17 and S24). Then, the current position is updated with the value of the position of the maximum successfully received channel (S25), whereafter the position is incremented by one (S27).

When the broadcasting station code is not detected, or even if the broadcasting station code is detected, when the second memory 8 does not include a coincident broadcasting station code, the format to be searched and the search time are set to the 8/30/Format1 of the second in the preferential order and 3.3 sec, respectively. In this condition, the broadcasting station code is searched (step S18). Here, if the broadcasting station code is detected and a coincident broadcasting station code is detected in the second memory 8, then the broadcasting station code is stored into the corresponding position of the fifth memory 11 (steps S19, S20 and S24).

When the broadcasting station code is not detected, or even if the broadcasting station code is detected, when no coincident broadcasting station code is detected in the second memory 8, the format to be searched and the search time are set to the PDC format of the third in the preferential order and 3.3 sec, respectively. In this condition, the broadcasting station code is searched (steps S21). Here, if the broadcasting station code is detected and a coincident broadcasting station code is detected in the second memory 8, then the broadcasting station code is stored into the corresponding position of the fifth memory 11 (steps S22, S23 and S24).

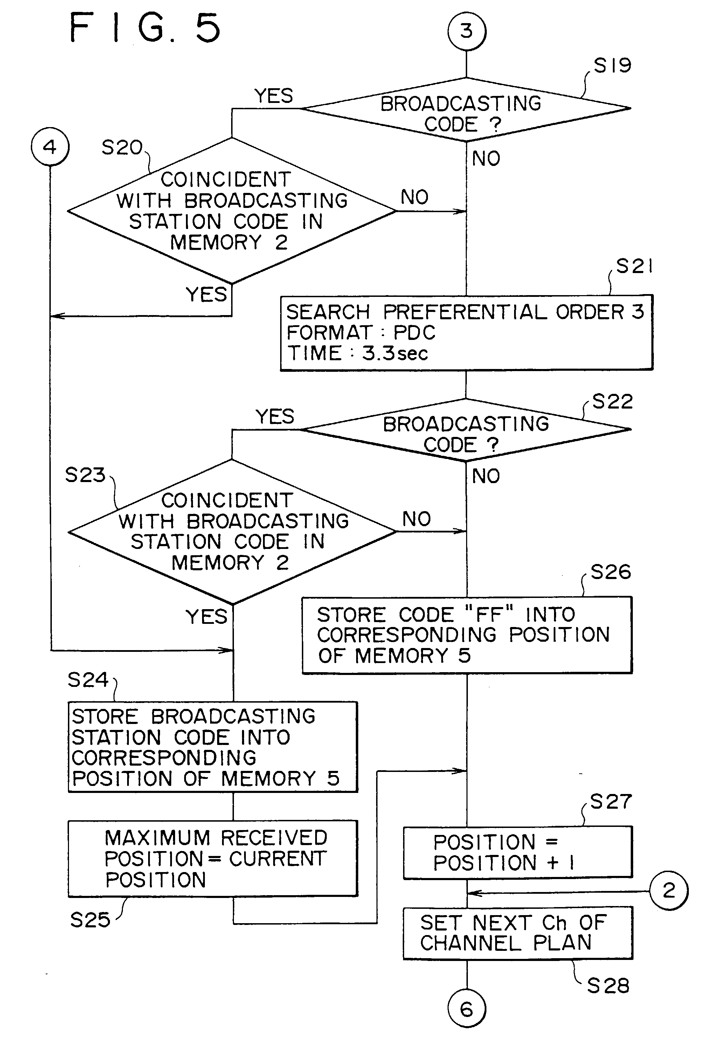

If the broadcasting station code coincident with any broadcasting station code stored in the second memory 8 is not successfully detected by the searching up to the format at the third in the preferential order, then the code "FF" is stored into the column of the broadcasting station code at the position 1 of the fifth memory 11 (step S26 in FIG. 5). Then, the position is incremented by one (step S27), and a next channel is set (step S28). Thereafter, the processing is repeated beginning with step S47.

Then, when the maximum channel is reached (step S47) or the maximum position is reached (step S48), the automatic channel presetting is completed, and then the guide channel setting is started.

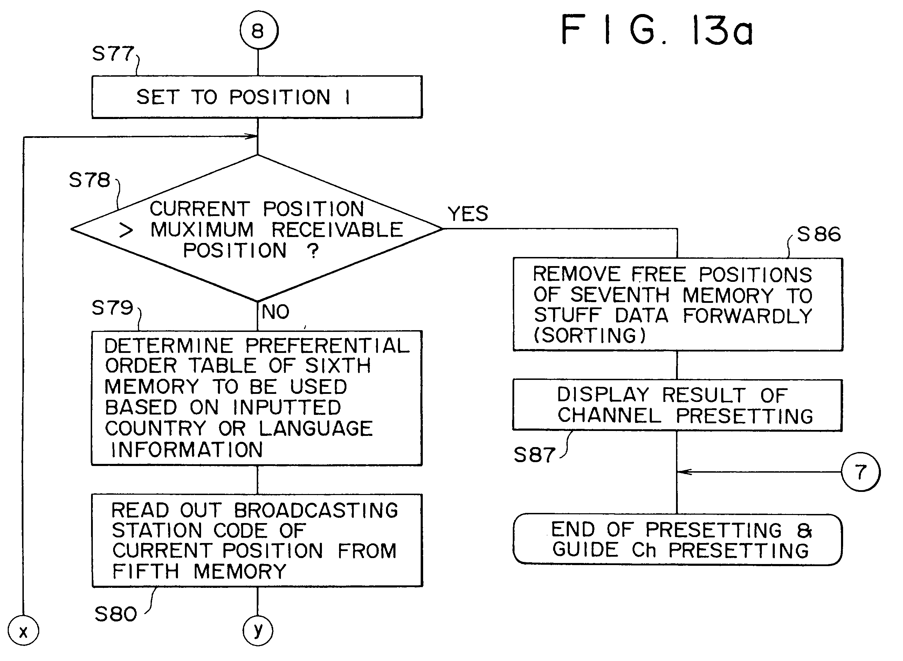

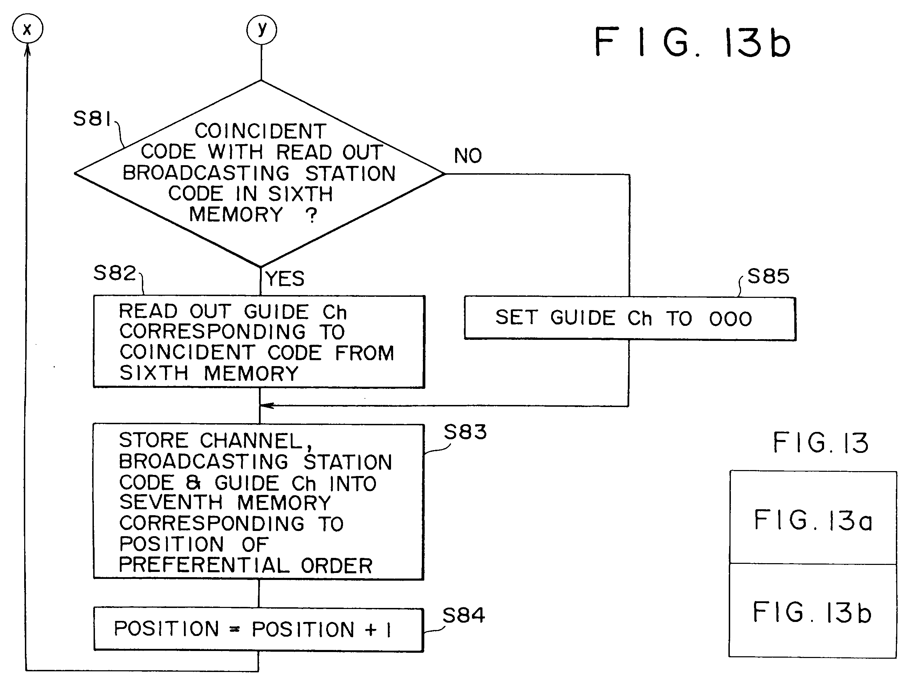

Referring now to FIG. 13, after the guide channel setting is started, the position is set to the minimum position, that is, to the position 1 at step S77. Then, based on the country information and the language information inputted, it is determined which one of the tables for the different countries of the sixth memory 21 should be used (step S79). Thereafter, the broadcasting station code at the current position is read out from the fifth memory 11 (step S80). The thus read out broadcasting station code is successively compared with the broadcasting station codes stored in the table determined at step S79 (step S81). If the comparison proves that a coincident broadcasting station code is present, then the corresponding guide channel is read out from the table of the sixth memory 21 (step S82) and is stored into the corresponding position of the seventh memory 22 (step S83).

For example, when the inputted country is Holland and the inputted language is Dutch, that one of the tables of the sixth memory 21 which is to be used is determined to be the table for Holland. Then, the broadcasting station code stored at the position 1 of the fifth memory 11 is 4803. This broadcasting station code is successively compared with the broadcasting station codes stored in the table for Holland of the sixth memory 21 beginning with that of the order number 1. The comparison reveals that the the broadcasting station codes with the third one of the broadcasting station codes. The guide channel for the third broadcasting station code is 010 as seen from FIG. 11 c. Consequently, it can be recognized that the selection channel at the position 1 is in the third in the priority order and the guide channel is 010. Further, from the second memory 8, it can be seen that the broadcasting station name is NED3.

By such a procedure as described above, setting of a guide channel is performed for all of the positions for which channel selection has been performed successfully (steps S84 and S78). However, for a channel with which no broadcasting station code has been detected successfully, or for a channel with which a broadcasting station code has been detected successfully but coincides with none of the broadcasting station codes stored in the sixth memory 21, the corresponding guide channel is set to 000 (step S85).

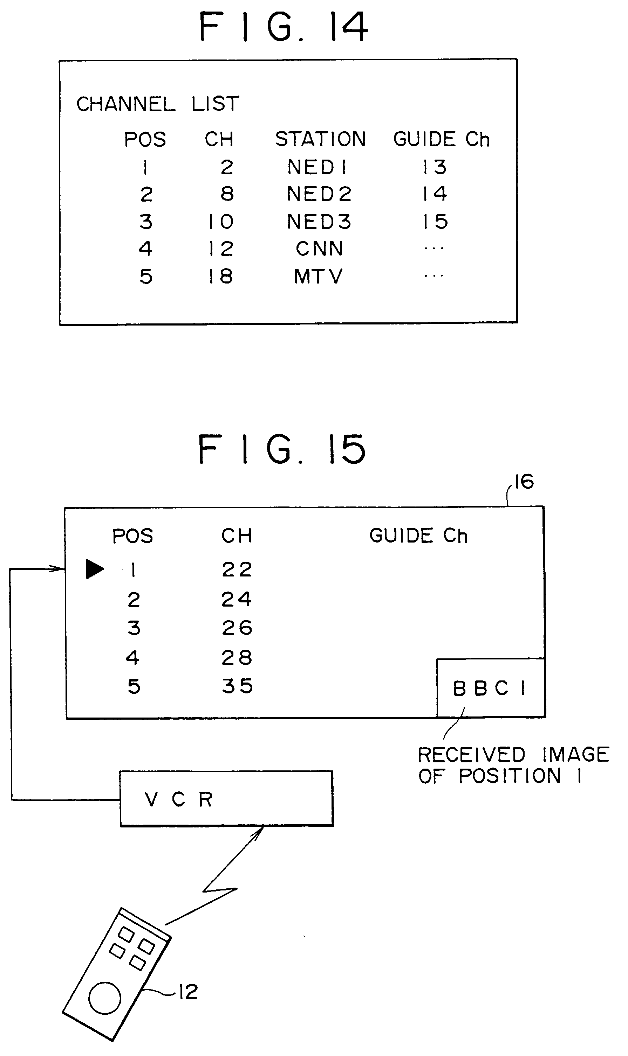

Then, if guide channels have been successfully determined for all of the positions and stored into the seventh memory 22, all free positions of the seventh memory 22 are removed to stuff the data stored in the fifth memory 11 forwardly (step S86). Thereafter, based on the information stored in the seventh memory 22 and he information stored in advance in the second memory 8, the results of the automatic channel presetting and the guide channel setting are displayed on the monitor television 16 (step S87). An example of the display screen of the monitor television 16 is shown in FIG. 14. If the execution key is depressed in this condition, then the display disappears and the automatic channel presetting and guide channel setting processing comes to an end.

It is to be noted that the third memory in the embodiment described above may be constructed otherwise such that it stores in advance a corresponding relationship between countries or languages and preferential orders of the formats to be searched. Further, the sixth memory may be constructed so that it stores in advance a corresponding relationship between broadcasting station identification information for different countries and guide channels of the Show View system. Furthermore, the picture recording apparatus of the present invention can be applied as a picture recording apparatus which records a video signal onto a hard disk, a magneto-optical disk or the like.

Though not particularly shown, the video cassette recorder shown in FIG. 10 has a function of inhibiting setting of the same guide channel for selection channels of two or more broadcasting stations.

Referring to FIG. 15, there is shown an example of an image displayed on the monitor television 16 connected to the video cassette recorder described above. When the keys of the remote commander 12 are manually operated to perform setting of a guide channel, a broadcast of a selection channel corresponding to each position is superimposed on the guide channel setting screen of the monitor television 16. The user will observe the image to confirm the broadcasting station and, observing a correspondence list between broadcasting stations and guide channels reported on such a television program guide magazine 13 as shown in FIG. 19 a, input the number of a guide channel corresponding to the broadcasting station at the position using the remote commander 12. FIG. 15 shows the screen for setting a guide channel for the position 1.

After the guide channel setting for the position 1 is completed, a guide channel for the position 2 is subsequently set in a similar manner, and thereafter, setting of guide channels up to the position 50 is successively performed.

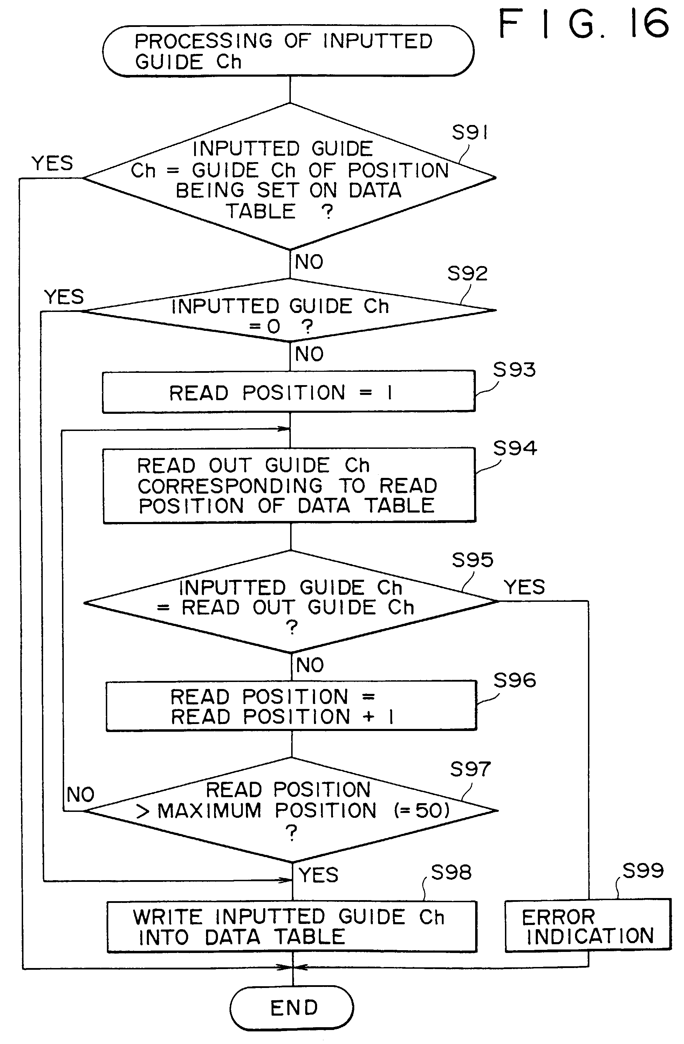

The processing of inhibiting setting of the same guide channel for selection channels of two or more broadcasting stations mentioned above is performed by the microprocessor 3 of the video cassette recorder shown in FIG. 10 and is illustrated in FIG. 16.

Referring to FIG. 16, first at step S91, it is discriminated whether or not a guide channel inputted is equal to the guide channel at the position on a data table for which setting is being performed. The data table may be the seventh memory 22 in FIG. 10 (also referred to FIG. 11 d) or such data table 17 as in the conventional video cassette recorder described hereinabove. Then, if the guide channels are equal to each other, then the processing is completed, but if they are not equal to each other, then the control sequence advances to next step S92. Step S91 is provided so that, when the inputted guide channel is equal to the guide channel at the position on the data table, the succeeding processing is omitted.

At step S92, it is discriminated whether or not the inputted guide channel is 0. If the inputted guide channel is 0, the value 0 which represents the inputted guide channel is written into the data table. Here, that the inputted guide channel is 0 signifies that the guide channel at the position is to be reset.

When the guide channel number is not 0 at step S92 described above, a read position is set to 1 at step S93, and a guide channel corresponding to the position 1 of the data table is read out at step S94.

Then, it is discriminated at next step S95 whether or not the guide channel read out and the inputted guide channel are equal to each other. If they are equal to each other, then an error indication is performed at step S99. Consequently, overlapping registration of any guide channel registered already can be eliminated.

On the other hand, if the guide channel read out and the inputted guide channel are not equal to each other, the read position is incremented by one at step S96. Then, it is discriminated at step S97 whether or not the read position exceeds a preset maximum value (= 50). If the read position does not exceed the preset maximum value (= 50), then the control sequence returns to step S94. On the other hand, when the read position exceeds the preset maximum value (= 50), the inputted guide channel is written into the position for which a guide channel is being set.

In this manner, in the video cassette recorder, each time a guide channel is inputted, all of the positions of the data table are retrieved to detect whether or not there is the same guide channel. If the same guide channel is present, then an error indication is performed, but if the same guide channel is not present, then the guide channel is written into the data table. Here, the position for which a guide channel is being set at present, that is, the position into which the inputted guide channel is to be written, is held in a register (not shown) connected to the microprocessor 3.

It is to be noted that, while the read position in the video cassette recorder described above is successively varied from the low value side to the high value side, it may alternatively be varied reversely from the high value side to the low value side. Further, the video cassette recorder may be constructed such that the guide channels at all of the 50 positions are not read out but guide channels are read out only from those positions at which selection channels are set. Furthermore, while an image of a broadcast selected by the tuner circuit is superimposed on the guide channel setting screen in the arrangement described above, the video cassette recorder may be otherwise constructed such that the guide channel setting screen is displayed switchably after the image of the broadcast is kept displayed for a fixed period of time on the entire screen. Further, the video cassette recorder having the function of inhibiting setting the same guide channel for selection channels of two or more broadcasting stations can be applied also to an apparatus for recording a video signal onto a hard disk or a magneto-optical disk of a computer and so forth.

Having now fully described the invention, it will be apparent to one of ordinary skill in the art that many changes and modifications can be made thereto without departing from the scope of the invention as set forth herein.

## Claims

1. A channel selection apparatus having a function of detecting broadcasting station identification information added to a video signal and registering the broadcasting station identification information together with channel information, characterized in that
a corresponding relationship in retrieval preferential order between countries and/or languages and a plurality of kinds of broadcasting station identification information is stored in advance in first storage means (9), and retrieval of broadcasting station identification information is performed in accordance with the preferential order stored in said first storage means (9) based on at least one of country information and language information inputted to said channel selection apparatus.

2. A channel selection apparatus according to claim 1, characterized in that a corresponding relationship between a plurality of kinds of broadcasting station identification information and retrieval times is stored in advance in second storage means (10).

3. An automatic channel presetting method for a channel selection apparatus having a function of detecting broadcasting station identification information added to a video signal and registering the broadcasting station identification information together with channel information, characterized in that it comprises the steps of
inputting at least one of country information and language information,
selecting a predetermined channel,
determining a retrieval preferential order of the broadcasting station identification information based on the inputted information and retrieving the broadcasting station identification information from a video signal of the selected channel, and
registering the detected broadcasting station identification information together with the selected channel information.

4. An automatic channel presetting method according to claim 3, characterized in that a predetermined retrieval time is set for each broadcasting station identification information.

5. A picture recording apparatus having a function of reserving picture recording using a Show View code, characterized in that:
first means (2) for selecting a video signal;
second means (6) for detecting broadcasting station identification information from the video signal selected by said first means (2);
third means (12, 13) for inputting information;
first storage means (21) in which corresponding relationships between broadcasting station identification information for different countries and guide channels of the Show View system are stored; and
second storage means (22) for registering a corresponding relationship between the selection channel selected by said first means and one of the guide channels; and that
the corresponding relationship between the selection channel and the guide channel is registered into said second storage means (22) based on the broadcasting station identification information detected by said second means (6) and one of the corresponding relationships stored in said first storage means (21) which is designated by country information inputted by said third means (12, 13).

6. A picture recording apparatus according to claim 5, characterized in that said first storage means (21) further stores in advance a corresponding relationship between broadcasting station information for different countries and different languages and guide channels of the Show View system, and country and language information is inputted by said third means (12, 13).

7. A picture recording apparatus according to claim 5, characterized in that registration into said second storage means (22) is performed in a predetermined preferential order.

8. A picture recording apparatus which includes means (12, 13) for inputting information, and storage means (22) for registering a corresponding relationship between a guide channel of the Show View system and a selection channel and wherein an inputted Show View code is decoded to obtain a starting date and time and an ending time of a program and the guide channel and the guide channel is converted into the selection channel to obtain picture recording reservation information, characterized in that,
when the corresponding relationship between the guide channel and the selection channel is to be registered into said storage means (22), if a guide channel inputted for registration coincides with one of registered guide channels, writing of the guide channel into said storage means (22) is inhibited.
